# EUROPÄISCHE PATENTSCHRIFT

(11) **EP 0 487 851 B1**
(45) Veröffentlichungstag und Bekanntmachung des Hinweises auf die Patenterteilung: **07.02.1996**
(21) Anmeldenummer: 91115921.8
(22) Anmeldetag: 19.09.1991
(51) Int. Cl.: F16B 5/12

(54) **Halteelement aus Kunststoff für Anbauteile, z.B. Schutz- oder Zierleisten an Kraftfahrzeugen**
Plastic fixing device for assembling elements like protection or beauty strips of cars
Element de fixation en plastique pour éléments de montage tels que des bandes de protection ou des enjoliveurs de voiture

(30) Priorität: 24.11.1990 DE 4037471
(43) Veröffentlichungstag der Anmeldung: 03.06.1992
(73) Patentinhaber: K.K.P. Konstruktive Kunststoff-Produkte Handelsgesellschaft mbH, D-97638 Mellrichstadt (DE)
(72) Erfinder: Hölzer, Eberhard, W-8712 Volkach-Gaibach (DE)
(74) Vertreter: Böck, Bernhard

(56) Entgegenhaltungen:
- GB-A- 956 098
- US-A- 2 252 925
- US-A- 2 933 794
- US-A- 4 765 036

## Beschreibung

Die Erfindung bezieht sich auf ein Halteelement aus Kunststoff für Anbauteile, z.B. Schutz- oder Zierleisten an Kraftfahrzeugen, mit wenigstens einem federnden Befestigungsmittel zur Verankerung des Halteelements in einer Bohrung im Karosserieblech des Kraftfahrzeugs (siehe zum Beispiel die US-A-2933794).

Bei bekannten derartigen Halteelementen ist das zur Verankerung des Halteelements dienende federnde Befestigungsmittel, meist in Form mehrerer Spreizarme, aus dem gleichen Kunststoff wie die übrigen Teile des Halteelements hergestellt. Da die Anbauteile jedoch z.B. im Falle von Schutzleisten für Kraftfahrzeuge immer breiter und damit schwerer werden, genügen die federnden Befestigungsmittel aus Kunststoff nicht mehr den gestellten Anforderungen. Hinzu kommt, daß die unterschiedlichen Anforderungen an diese Befestigungsmittel, nämlich einerseits relativ niedrige Eindrückkräfte bei der Montage und andererseits relativ hohe Abzugskräfte nach erfolgter Montage, mit den Kunststoffmaterialien, aus welchen diese Halteelemente hergestellt werden, nicht mehr optimal zu lösen sind.

Der Erfindung liegt die Aufgabe zugrunde, die obigen Mängel zu vermeiden und ein Halteelement aus Kunststoff für Anbauteile zu schaffen, welches einerseits mit relativ geringem Kraftaufwand zu montieren ist und andererseits nach erfolgter Montage auch relativ hohen Abzugskräften standhält und damit auch verhältnismäßig schwere Anbauteile tragen kann.

Gemäß der vorliegenden Erfindung wird die Aufgabe dadurch gelöst, daß das federnde Befestigungsmittel aus einem einstückig mit dem Halteelement ausgebildeten Kunststoffteil besteht, dessen Haltekräfte durch ein zusätzliches Federelement aus Metall oder einem Kunststoff unterstützt werden, dessen Federcharakteristik im wesentlichen dem metallischen Federelement entspricht. Bei dieser Lösung werden die Haltekräfte des aus einem Kunststoffteil bestehenden Befestigungsmittels durch das zusätzliche Federelement ergänzt.

Wenn nach einer weiteren Ausgestaltung der Erfindung das einstückig mit dem Halteelement ausgebildete und als Befestigungsmittel dienende Kunststoffteil ein zapfenförmiger Hohlkörper ist, der durch ein eingebautes hülsenförmiges Federelement geringfügig radial aufweitbar ist, übernimmt vorteilhaft der zapfenförmige Hohlkörper aus Kunststoff die Funktion einer Schutztülle. Da er einstückig mit dem Halteelement ausgebildet ist, wird der bei Verwendung einer Schutztülle extra erforderliche Aufziehvorgang eingespart.

Bei einer bevorzugten Ausführungsform weist das hülsenförmige Federelement mehrere, in Umfangsrichtung beabstandete Längsschlitze auf und die streifenförmigen Hülsenabschnitte zwischen diesen Längssschlitzen sind radial nach außen gebogen bzw. ausgebaucht. Dieses hülsenförmige Federelement kann vorteilhaft in einem vorgeschalteten Arbeitsgang in den zapfenförmigen Hohlkörper des Halteelements eingedrückt werden, so daß an der Montagestelle des Halteelements kein zusätzlicher Arbeitsgang anfällt.

Durchmesserschwankungen an der Aufnahmebohrung für das Halteelement bzw. Toleranz in der Blechdicke können vorteilhaft einfach dadurch kompensiert werden, daß der zapfenförmige Hohlkörper an seinem Außenumfang einen ringförmigen abgestuften Anlagebund aufweist.

Die radiale Aufweitung des zapfenförmigen Hohlkörpers durch das hülsenförmige Federelement wird begünstigt, wenn der zapfenförmige Hohlkörper mehrere, in Umfangsrichtung beabstandete Längsschlitze enthält.

Die Erfindung wird anschließend anhand der Zeichnungen von Ausführungsbeispielen erläutert. Es zeigen:
Figur 1: eine Querschnittsansicht einer Ausführung eines Kunststoff-Halteelements für eine Schutzleiste an einem Kraftfahrzeug im montierten Zustand und
Figur 2: eine Seitenansicht des in Figur 1 gezeigten Halteelements, um 90° verdreht, jedoch ohne Blechteil mit Montageöffnung.

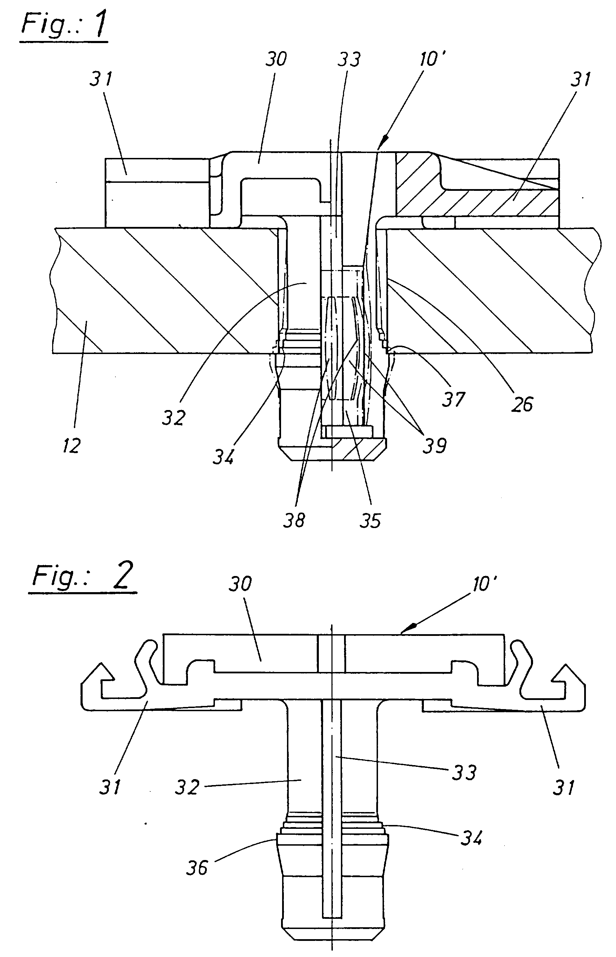

Das in den Figuren 1 und 2 gezeigte Halteelement 10' dient z.B. zur Fixierung einer nicht gezeigten Schutzleiste an einem Karosserieblech 12 eines Kraftfahrzeugs. Das Halteelement 10' ist aus Kunststoff hergestellt und weist ein Basisteil 30 auf, an dem seitlich federnde Haltearme 31 angeformt sind, die in die nicht gezeigte Schutzleiste eingeclipst werden können. An dem Basisteil 30 ist mittig ein als Befestigungsmittel dienender zapfenförmiger Hohlkörper 32 angeformt. Der zapfenförmige Hohlkörper 32 ist beim Ausführungsbeispiel mit vier in Umfangsrichtung in gleichen Abständen voneinander angeordneten Längsschlitzen 33 versehen. An seinem Außenumfang ist der zapfenförmige Hohlkörper 32 mit einem abgestuften Anlagebund 34 ausgerüstet. Der zapfenförmige Hohlkörper 32 ist an seinem gemäß den Figuren 1 und 2 unteren Ende verschlossen, jedoch an seinem oberen Ende offen, so daß von oben in den Hohlkörper 32 ein hülsenförmiges Federelement 35 eingedrückt werden kann, welches in Figur 1 in strichpunktierten Linien angedeutet ist. Das Federelement 35 bewirkt eine geringfügige radiale Aufweitung des zapfenförmigen Hohlkörpers 32, die in Figur 1 gleichfalls in strichpunktierten Linien angedeutet ist. Im montagebereiten Zustand enthält das Halteelement 10' bereits das hülsenförmige Federelement 35.

Zur Fixierung des Halteelements 10' am Karosserieblech 12 wird das Halteelement 10' mit seinem geringfügig radial aufgeweiteten zapfenförmigen Hohlkörper 32' in eine Aufnahmebohrung 26 im Karosserieblech 12 eingedrückt, bis die Haltearme 31 auf der Außenseite des Karosserieblechs 12 aufliegen. Der ringförmige Anlagebund 34 wird dabei radial nach innen gedrückt, und sobald sein Abschnitt 36 mit dem größten Durchmesser aus dem unteren Ende der Aufnahmebohrung 26 ausgetreten ist, weitet sich der elastische zapfenförmige Hohlkörper 32 wieder radial nach außen auf, wobei diese Aufweitung durch das hülsenförmige Federelement 35 unterstützt wird. Im Zuge dieser radialen Ausdehnung kommt dann eine der Stufen des ringförmigen Anlagebundes 34 in Eingriff mit dem unteren Rand 37 der Aufnahmebohrung 26. Im montierten Zustand des Haltelements 10', der in Figur 1 gezeigt ist, unterstützt das hülsenförmige Federelement 35 die Haltefunktion des zapfenförmigen Hohlkörpers 32, d.h., das hülsenförmige Federelement 35 bewirkt, daß der Anlagebund 34 mit einer seiner Abstufung dauerhaft gegen den unteren Rand 37 der Aufnahmebohrung 26 gehalten wird. Die Abstufung am ringförmigen Anlagebund 34 gleicht Toleranzen in der Dicke des Karosserieblechs 12 sowie im Durchmesser der Aufnahmebohrung 26 aus.

Das hülsenförmige Federelement 35 weist beim Ausführungsbeispiel zahlreiche, in Umfangsrichtung gleichmäßig beabstandete Längsschlitze 38 auf und die zwischen diesen Längsschlitzen 38 vorhandenen streifenförmigen Hülsenabschnitte 39 sind geringfügig radial nach außen gebogen bzw. ausgebaucht, um die oben erwähnte radiale Aufweitung des zapfenförmigen Hohlkörpers 32 zu erzeugen. Bei der in Figur 1 gezeigten Lösung besteht das hülsenförmige Federelement 35 aus Federstahl.

Bei einer nicht gezeigten anderen Ausführungsform der Erfindung kann das Federlement zur radialen Aufweitung des zapfenförmigen Hohlkörpers 32 z.B. aus einem topfförmigen Teil mit einer Reihe von radial nach außen gespreizten Armen bestehen und dieses Teil kann aus Federstahl oder auch aus einem federnden Kunststoff hergestellt sein, dessen Federcharakteristik im wesentlichen der von Federstahl entspricht.

## Patentansprüche

1. Halteelement aus Kunststoff für Anbauteile, z.B. Schutz- oder Zierleisten an Kraftfahrzeugen, mit wenigstens einem federnden Befestigungsmittel zur Verankerung des Halteelements in einer Bohrung im Karosserieblech des Kraftfahrzeugs,
dadurch **gekennzeichnet**,
daß das federnde Befestigungsmittel aus einem einstückig mit dem Halteelement (10') ausgebildeten Kunststoffteil (32) besteht, dessen Haltekräfte durch ein zusätzliches Federelement (35) aus Metall oder einem Kunststoff unterstützt werden, dessen Federcharakteristik im wesentlichen dem metallischen Federelement entspricht.

2. Halteelement nach Anspruch 1,
dadurch **gekennzeichnet**,
daß das einstückig mit dem Halteelement (10') ausgebildete und als Befestigungsmittel dienende Kunststoffteil ein zapfenförmiger Hohlkörper (32) ist, der durch ein eingebautes hülsenförmiges Federelement (35) geringfügig radial aufweitbar ist.

3. Halteelement nach Anspruch 2,
dadurch **gekennzeichnet**,
daß das hülsenförmige Federelement (35) mehrere, in Umfangsrichtung beabstandete Längsschlitze (38) aufweist und die streifenförmigen Hülsenabschnitte (39) zwischen diesen Längsschlitzen (38) radial nach außen gebogen bzw. ausgebaucht sind.

4. Halteelement nach Anspruch 2,
dadurch **gekennzeichnet**,
daß der zapfenförmige Hohlkörper (32) an seinem Außenumfang einen ringförmigen abgestuften Anlagebund (34) aufweist.

5. Halteelement nach Anspruch 2,
dadurch **gekennzeichnet**,
daß der zapfenförmige Hohlkörper (32) mehrere, in Umfangsrichtung beabstandete Längsschlitze (33) enthält.

## Claims

1. Plastic restraining element for unit parts, for example protective strips or trims on vehicles, having at least one resilient attachment means for anchoring the restraining element in a bore in the body sheet of the vehicle, characterised in that the resilient attachment means consists of a plastic part (32) designed to be integral with the restraining element (10'), the restraining forces of which are assisted by an additional spring element (35) made from metal or a plastic, the spring characteristic of which corresponds essentially to the metal spring element.

2. Restraining element according to claim 1, characterised in that the plastic part serving as attachment means and designed to be integral with the restraining element (10') is a pin-like hollow body (32) which can be expanded slightly radially by means of an incorporated sleeve-like spring element (35).

3. Restraining element according to claim 2, characterised in that the sleeve-like spring element (35) has several longitudinal slots (38) spaced over the periphery and the strip-like sleeve sections (39) between these longitudinal slots (38) are bent or bulged radially outwards.

4. Restraining element according to claim 2, characterised in that the pin-like hollow body (32) has an annular recessed stop collar (34) on its outer periphery.

5. Restraining element according to claim 2, characterised in that the pin-like hollow body (32) contains several longitudinal slots (33) spaced over the periphery.

## Revendications

1. Elément de fixation en matière plastique pour éléments de montage, tels que par exemple des bandes de protection ou des enjoliveurs de véhicules à moteur, avec au moins un moyen élastique de fixation pour ancrer l'élément de fixation dans un perçage dans la tôle de la carrosserie du véhicule à moteur, élément de fixation caractérisé en ce que le moyen élastique de fixation consiste en une pièce en matière plastique (32) constituée d'une seule pièce avec l'élément de fixation (10'), pièce en matière plastique (32) dont les forces de fixation sont renforcées par un élément élastique supplémentaire (35) en métal ou en une matière plastique, dont le coefficient d'élasticité correspond sensiblement à celui de l'élément élastique en métal.

2. Elément de fixation selon la revendication 1, caractérisé en ce que la pièce en matière plastique constituée d'une seule pièce avec l'élément de fixation (10') et servant de moyen de fixation est un corps creux (32) en forme de téton, qui peut être légèrement élargi radialement par un élément élastique, incorporé (35), en forme de manchon.

3. Elément de fixation selon la revendication 2, caractérisé en ce que l'élément élastique (35) en forme de manchon présente plusieurs fentes longitudinales (38), situées à distance les unes des autres dans le sens périphérique, et les sections de manchon (39) en formes de bandes, qui sont entre ces fentes longitudinales (38), sont incurvées radialement vers l'extérieur ou rendues ventrues vers l'extérieur.

4. Elément de fixation selon la revendication 2, caractérisé en ce que le corps creux en forme de téton (32) présente sur son pourtour extérieur une collerette d'appui (34) à gradins, de forme annulaire.

5. Elément de fixation selon la revendication 2, caractérisé en ce que le corps creux en forme de téton (32) contient plusieurs fentes longitudinales (33), situées à distance les unes des autres dans le sens périphérique.
